# EUROPEAN PATENT SPECIFICATION

(11) **EP 3 937 037 B1**
(45) Date of publication and mention of the grant of the patent: **08.01.2025**
(21) Application number: 20315362.2
(22) Date of filing: 27.07.2020
(51) Int. Cl.: G06F 21/32, G06F 21/33, H04L 9/08, H04L 9/32, H04W 12/06, H04W 12/08, H04W 12/12, H04W 12/069, H04L 9/40, G06V 40/40, G06V 40/50

(54) **A SYSTEM AND METHOD FOR DIGITAL IDENTITY AUTHENTICATION BASED ON BIOMETRIC DATA**
SYSTEM UND VERFAHREN ZUR AUTHENTISIERUNG EINER DIGITALEN IDENTITÄT BASIEREND AUF BIOMETRISCHEN DATEN
SYSTÈME ET PROCÉDÉ POUR L'AUTHENTIFICATION DES IDENTITÉS NUMÉRIQUES BASÉ SUR DES DONNÉES BIOMETRIQUES

(30) Priority: 08.07.2020 FR 2007247
(43) Date of publication of application: 12.01.2022
(73) Proprietor: SHAREID, 92200 Neuilly-sur-Seine (FR)
(72) Inventor: SEBTI, Sara, 92100 Boulogne-Billancourt (FR); REZIG, Sawsen, 94250 Gentilly (FR)
(74) Representative: IPAZ

(56) References cited:
- EP-A1- 3 257 223
- EP-B1- 3 257 223
- US-A1- 2004 054 913
- US-A1- 2019 197 815
- US-A1- 2020 036 707
- US-A1- 2020 213 302
- "Implementation of Secure Authentication Technologies for Digital Financial Services", vol. ties/17, 25 August 2019 (2019-08-25), pages 1 - 71, XP044271587, Retrieved from the Internet <URL:https://www.itu.int/ifa/t/2017/sg17/docs/190827/td/ties/plen/T17-SG17-190827-TD-PLEN-2315!!ZIP-E.zip%20ITU_SIT_WG%20Strong%20AuthenticationTechnologies22-08-2019.docx> [retrieved on 20190825]

## Description

### FIELD OF THE INVENTION

The present invention relates to the field of digital security. More specifically, it relates to the creation and authentication of the digital identity of a user.

### BACKGROUND PRIOR ART

The authentication of online identity is of paramount importance as the number of online applications is in constant augmentation. For example, digital identity is now used for sensitive applications, such as managing bank accounts, paying taxes, renting cars, etc...

In general, the online identity authentication is performed by using a login and password. When needed, each merchant server can request a user to provide copies of official documents (ID cards, passports, driver license...) to assess the link between a digital identity and a physical identity.

This however presents significant security threats. First of all, the verifications of identity are performed by a wide number of different actors, that do not necessarily have the infrastructure for an efficient identity verification. Therefore, information about an individual is completely fragmented online, and can result in fraudulent identity creation.

In addition, user data are stored using centralized databases in each merchant server. Such user data may comprise sensitive data such as copies of ID cards, driver, license, etc... These centralized databases represent a target for cybercriminals, which can, in case of successful cyberattack, compromise sensitive user data.

This also poses a problem of data management: a user is currently not able to select the information he is willing to share to authenticate himself for different online service. This lack of control of the use of personal data may be problematic for user, as well as limiting the compliance with data protection regulations, such as the European Union GDPR (General Data Protection Regulation).

None of the currently developed solutions have been able to solve the above mentioned problems.

For example, the US patent published under number US 9721147 relies on using a driver license for authenticating users. If this solution allows defining a link between a digital and physical identity, it presents the following drawbacks:
- sensitive information (driver license) is stored on centralized database. Therefore, it can be compromised in case of cyberattacks ;
- information extracted from the driver license is inserted within the digital identity of the user. Therefore, a user cannot control the information he is willing to share with third parties to authenticate himself.

Blockchain technologies have been introduced, for example in the patent application published under the number US 2018/0294966 to tackle the issue of data compromising. Such solutions prevent user data to be compromised by a cyberattack of a centralized database. Nevertheless, they rely hugely on the willingness of service providers to collaborate in order to constitute a blockchain network. Furthermore, it is very hard to guarantee data format coherence between the different collaborators, this may result in complex hash generation function and risk of duplication of user's identity.

Another option for limiting the risks of dissemination of user information consists in using delegated authentication. Such delegated authentication is for example implemented by the Open ID connect standard built on top of OAuth. This consists in relying on a third party to authenticate user (for example, using Facebook or Google to login in a 3^{rd} party website). The user therefore authenticates himself using his login and password at each iteration. However, this does not allow establishing a link between the digital and physical identity of a user. Furthermore, the identity of a user can easily be compromised if one steals his credentials.

There is therefore the need for a system and method for the authentication of the digital identity of a user, that in the same prevents fraudulent identity creation and authentication, prevents the compromising of user data, and allows the user to finely control the data he is willing to share when authenticating himself.

EP 3 257 223 describes a method of a digital identity system generating a sharing token for authenticating a bearer to a validator, wherein a data store of the digital identity system holds a plurality of attributes of the bearer.

US 2019 / 197 815 describes systems and methods for use in provisioning digital identities for users.

According to US 2020/036707, secure communications are provided between a user computing device and a server computing device; an enrollment request is received from a user computing device that is configured via a distributed client software application and is processed.

*"implementation of secure authentication technologies for digital financial services"* ITU-T draft, study period 2017-2020; study group 17, international communication union, Geneva, describes at items 8.1.3 and 8.2.3 Korean Fast Identity Online (K-FIDO) enrolment and authentication.

### SUMMARY OF THE INVENTION

To this effect, the invention discloses a computing system according to claim 1.

Further preferred features of the computing system according to the invention are given in dependent claims 2 to 10.

The invention also discloses a computer-implemented method according to claim 11.

Further preferred features of the computer-implemented method according to the invention are given in dependent claim 12.

The invention also discloses a computer program product according to claim 13.

### BRIEF DESCRIPTION OF THE DRAWINGS

The invention will be better understood and its various features and advantages will emerge from the following description of a number of exemplary embodiments provided for illustration purposes only and its appended figures in which:
- Figure 1 represents a computing system in a number of embodiments of the invention ;
- Figure 2 represents a functional scheme of the components of a computing system in a number of embodiments of the invention ;
- Figure 3 represents a flow chart of a computer-implemented method for creating a digital identity in a number of embodiments of the invention ;
- Figure 4 represents a flow chart of a computer-implemented method for authenticating a user in a number of embodiments of the invention ;
- Figure 5 represents a computer-implemented method for generating hash data from reference biometric data.

### DETAILED DESCRIPTION OF THE INVENTION

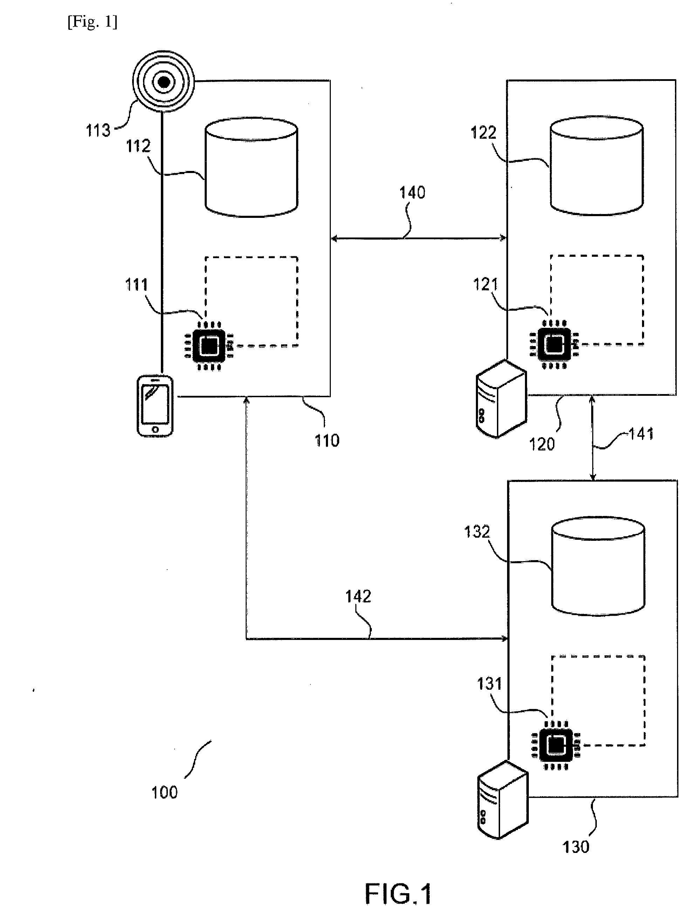

Figure 1 represents a computing system in a number of embodiments of the invention.

The computing system 100 is configured to create a digital identity for a users, as well as authenticating users.

The computing system 100 comprises a first computing device 110. The computing device 110 can be a user device, such as for example a smartphone, a tablet, a personal computer, etc... In the figure 1, the first computing device 110 is represented as a smartphone. This example is however not limitative, and the first computing device 110 may be virtually any kind of computing device able to perform computation and capture biometric data.

The first computing device 110 notably allows the user to perform a request to create a digital identity, and perform authentication requests. The first computing device 110 can also store certain authentication data, such as a private key and a signed certificate.

To this effect, the first computing device comprises at least one sensor 113 able to capture biometric data. The sensor 113 may be either located within the housing of the device (such as an internal camera), or in a separate housing directly connected to the first device 110 (such as a webcam connected through a wired or Bluetooth connection, for instance). For the sake of simplicity, the at least one sensor 113 will be mainly referred to as "the sensor" in the remaining of this disclosure, although the first device 110 may comprise one or more sensors 113 for capturing biometric data of the same or of different types.

According to various embodiments of the invention, the biometric data may be any biometric data that allows assessing the identity of a user. The biometric data may for example be:
- DNA matching ;
- Eyes - Iris recognition ;
- Face recognition ;
- Fingerprint recognition ;
- Handwriting recognition ;
- Voice recognition ;
- Etc...

The sensor 113 is therefore adapted to the biometric data that is used. For example, the sensor 113 may be:
- A camera for Eye-iris recognition, face recognition ;
- A fingerprint sensor for fingerprint recognition ,;
- A touchpad for handwriting recognition ;
- A microphone for voice recognition ;
- Etc...

According to various embodiments of the invention, one or more sensors may be used, for capturing one or more biometric data respectively.

In a number of embodiments of the invention, the sensor 113 is a camera, and the biometric data is a face liveness detection.

The face liveness detection, described for example by the US patent published under the number US8856541B1, consists in prompting a user to perform several face captures using a camera, under different angles of view, either in the form of a video or a series of images, and verifying if the different face capture correspond to a living person in front of the camera. Then, if this condition is fulfilled, face recognition can be applied to the capture image to identify the face. The face recognition may for example be performed using face landmarks detection, for example using a trained neural network. More generally, any face liveness detection/ face recognition method may be used within the invention.

The face liveness detection provides a number of advantages:
- It ensures that the biometric data is capture from a live user;
- It provides a complete information for face recognition ;
- It can be implemented using a camera commonly present in many user devices, such as smartphones or tablets.

The first computing device further comprises at least one processing logic 111. According to various embodiments of the invention, a processing logic may be a processor operating in accordance with software instructions, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium. For the sake of simplicity, in the remaining of the disclosure the one or more processing logic will be called "the processing logic". However, it should be noted that the operations of the invention may also be performed in a single processing logic, or a plurality of processing logics, for example a plurality of processors.

In a number of embodiments of the invention, the first computing device 110 further comprises a memory 112. According to various embodiments of the invention, the at least one memory 112 can comprise either volatile or non-volatile memories. Any suitable type of memory can be used, such as DRAM (Dynamic Random-Access Memory), SRAM (Static Random-Access Memory), NVRAM (Non-Volatile Random-Access Memory), flash memory, Solid-state storage, a magnetic tape, an optical disc drive. Any suitable type of memory can be identified by a person skilled in the art.

The system 100 further comprise at least one second computing device 120. The at least one second computing device 120 is responsible for the tasks relative to the creation of the digital identity of the user: verification of the physical identity, creation of a signed certificate, public/private key pairs, etc...

The at least one computing device 120 may be of different types. For example, it may be at least one server. Although, in the figure 1, only one second computing device 120 is represented, according to a number of embodiments of the invention, these tasks may be split across a plurality of computing devices, for example a plurality of servers.

The at least one computing device 120 comprises at least one processing logic 121, and at least one memory 122. Although a single processing logic 121 and a single memory 122 are represented in the figure 1, the at least one computing device 120 may comprise a plurality of processing logics and memories. It is in particular the case, if the at least one computing device 120 consists in a plurality of servers, each having its own processing logics and memories.

The computing system 100 also comprises a communication link 140 between the computing device 110, and the at least one computing devices 120. The communication link 140 may consist in any communication link allowing the exchange of information between the devices. For example, the communication link may comprise an internet connection, and communication ports. The communication link 140 may comprise a wireless connection of the first computing device 110, for example a connection to a 4G network.

In a number of embodiments of the invention, the system 100 further comprises at least one third computing device 130. The at least one third computing device 130 may be one or more third party computing devices, such as merchant servers that are willing to authenticate a user.

The at least one third computing devices 130 may be of different types. For example, it may be at least one server. Although, in the figure 1, only one third computing device 130 is represented, according to a number of embodiments of the invention, these tasks may be split across a plurality of computing devices, for example a plurality of servers.

The at least one computing device 130 comprises at least one processing logic 131, and at least one memory 132. Although a single processing logic 131 and a single memory 132 are represented in the figure 1, the at least one computing device 130 may comprise a plurality of processing logics and memories. It is in particular the case, if the at least one computing device 130 consists in a plurality of servers, each having its own processing logics and memories.

The computing system 100 may also comprise a communication link 141 between the at least one computing device 120, and the at least one computing devices 130, and a communication link 142 between the first computing device 110, and the at least one computing devices 130.

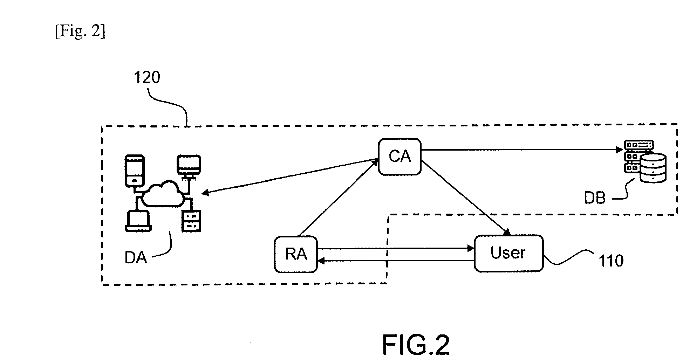

Figure 2 represents a functional scheme of the components of a computing system in a number of embodiments of the invention.

The functionalities of the computing system according to the invention are based on the functionalities of a PKI (Private Key Infrastructure) Digital Identity Management System.

In particular, the following functionalities can be implemented by the at least one computing device 120:
- a Certification Authority (CA) issues and signs the digital certificates, thereby creating a digital identity of a user tied to a physical identity ;
- a Registration Authority (RA) verifies the identities of entities requesting their d digital certificates to be stored at the CA ;
- a Deposit Authority (DA) stores the digital certificates;
- a DataBase (DB) stores a hash based on biometric data of users. This allows verifying if a new biometric data complies with previously stored biometric data, without exposing the biometric data itself. Therefore, a user can, if he forbids his credentials, use new captures of biometric data to retrieve his credentials ;
- a Relying Party (RP) is a third party that relies on the DA for user authentication. It may for example be a merchant server that relies on the signed certificates for authenticating users.

According to various embodiments of the invention, the DA, RA, CA and DB may be implemented either by the same second computing device 120, or by a plurality of different computing devices 120. A RP may typically be implemented by a third computing device 130.

The key features of the invention, and some of its embodiments, are the following.

The PKI infrastructure of the invention is based on the user's biometric data. Therefore, unique signed certificates are generated based on the biometric data, thereby creating a solid link between the online and offline identity of users. In case a user wishes to perform a sensitive operation (addition of information, retrieval of certificates, etc...), a strong identification of the user can be performed by comparing live biometric data to previously stored biometric data.

The PKI infrastructure of the invention provides a Self-sovereign identity (SSI), this means that people and businesses can store their own identity data on their own devices, in particular the first device 110, choosing which pieces of information to share with service providers. The users therefore have complete ownership and control of their personal data; hence, they can create the identity (and get an attributed certificate), update the information (when changing a device for example), revoke the certificate or delete the biometric information on their device.

In a number of embodiments of the invention, a hash value is generated by the certification authority based on the user's biometric information. The used hash function can be a multilayer, deterministic function that generates a unique value for each input and thus ensures that the input information used to generate the hash cannot be retrieved using the hash value. Stated otherwise, the hash function allows asserting that a user sending new biometric data is the same than a user having previously stored reference biometric data, without risking the compromising of the biometric data itself.

In a number of embodiments of the invention, the multilayer hash function describes a biometric data chain in order to provide a high level of security when storing the hash values on a DB server. When the user/resource owner creates his identity, a first biometric information is requested and used to generate the hash value, this will constitute a genesis biometric hash. When a new biometric/personal data is added by the user, the new data is added to the old hash to generate a new hash. The process is repeated for all the new data. This process creates an unbreakable dependency: each biometric data links back to its previous data through its hash. The invention provides a secure, immutable, transparent hash.

In the subsequent figures, we will now examine the steps for creating a digital identity, and authenticating users, in a number of embodiments of the invention.

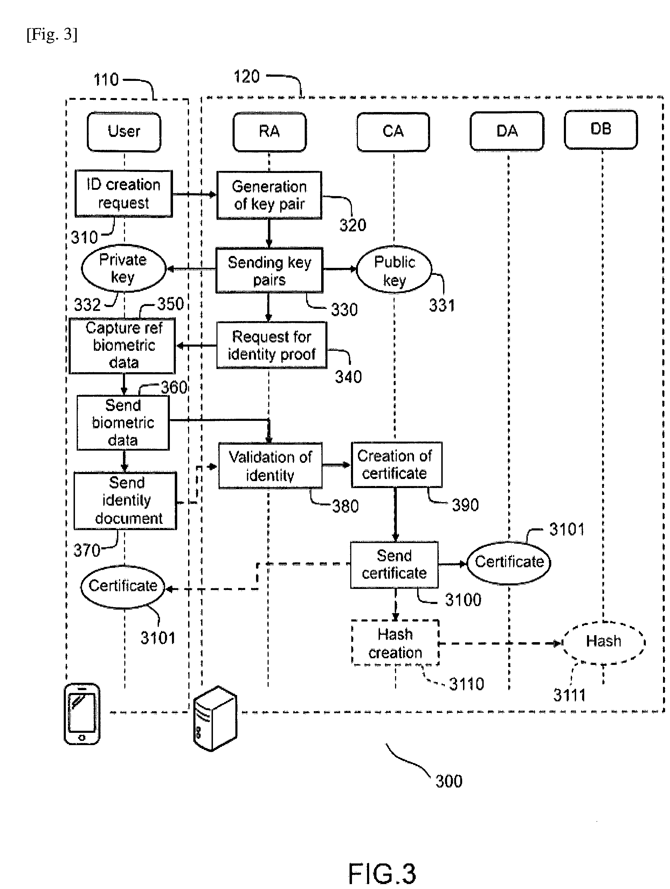

Figure 3 represents a flow chart of a computer-implemented method for creating a digital identity in a number of embodiments of the invention.

The figure 3 represents the steps of a method for creating a digital identity in a number of embodiments of the invention, as performed by the various functionalities of a PKI infrastructure according to the invention. In order to ease the comprehension of the figure 3, one column is created for each of the functionalities (user, RA, CA, DA, DB). The steps performed by the column user are actually performed by the processing logic 111, while the steps performed by the columns RA, CA, DA, BD are actually performed by the at least one processing logic 121.

In a first step 310, the user device 110 sends a request for the creation of a digital identity to the RA. This request can for example be sent through the interface of a user application.

At the step 320, the RA generates a pair of private and public keys. For example, the keys may be generated using asymmetric encryption methods such as the RSA method. The generation of the key pairs allows communicating securely between the first and the second device. In a number of embodiments, the keys are provisional, and are validated only when the digital identity of the user is fully verified.

At step 330, the RA sends the private key 332 to the user / first device 110, and the public key 331 to the CA.

At step 340, the RA sends a request for identity proof to the user / first device 110. This consists in requesting to the user to prove its identity using reference biometric data, and, in a number of embodiments of the invention, identity documents.

Upon reception of this request, the first device 110 is configured to use the sensor 113 to capture reference biometric data of the user. This biometric data is referred to as "reference biometric data", because it is the data that is used for creating the identity, and, during authentication, live biometric data can be compared to said reference biometric data to ensure that the user that is trying to authenticate himself is the same than the one that created the digital identity. This step depends upon the type of biometric data that is used. For example, if the reference biometric data are fingerprint, this step consists in prompting the user to use a fingerprint detector of the first device 110 to capture his fingerprint; if the reference biometric data are face liveness detection, this step consists in prompting the user to use a camera of the first device 110 to capture images of his face to perform the face liveness detection, and face recognition, etc...

The extracted reference biometric data depends of the type of sensor and reference biometric data. For example, if the sensor is a camera and reference biometric data face liveness detection, the extracted reference biometric data may be face landmarks, that represent a set of distinctive points on the person's face.

In step 360, the first device 110 sends the extracted reference biometric data to the RA.

In a number of embodiments of the invention, the method 300 further comprises a step 370 wherein the first device 110 sends an identity document to the RA. This identity document may for example be an identity card, a passport, a driver license, etc... In general, identity documents issued by a trusted administrative authority can be used.

The use of an identity document allows obtaining a strong link between a digital and physical identity of a user.

In a number of embodiments of the invention, the RA has its own public/private key pair, and the reference biometric data and identity documents are encrypted with the public key of the RA before being sent, in order that only the RA is able to decrypt the documents using its own private key, so that the information cannot be intercepted.

After reception of the reference biometric data and, if applicable, the identity document, the method 300 comprise a step 380 of validation of the identity of the user by the RA.

This step may comprise a substep of validation of the authenticity of the reference biometric data. For example, if the reference biometric data are face liveness detection, this step may comprise the verification than the face liveness is representative of a live face, in order to assess the liveness of the user.

In case identity documents are used, this step may also comprise a verification of the validity of the identity documents. For example, the RA may request administrative authorities to ensure that an identity document (ID card, driver license, passport...) is valid.

If the step 380 results in a positive validation, the RA sends the validation to the CA. In embodiments wherein the key pair are initially provisional, the key pair is validated and associated to the signed certificate.

Then, the CA creates, at the step 390, a signed certificate for the user. The signed certificate comprises:
- a digital identifier of the user;
- the public key.

According to various embodiments of the invention, the user can add any information he wishes to the certificate.

The certificate is signed by the CA, which means that any third party is able to trust the certificate, provided that it trusts the CA.

At step 3100, the certificate3101 is sent to the user and the DA. The user can therefore use the certificate for authentication. The DA, on the other hand, can store the certificate if it needs to be sent again to the user.

The method 300 provides a number of advantages.

The signed certificate is issued after the validation of the reference biometric data of the user and, if applicable, identity documents. Therefore, the signed certificate provides a strong indication that identity of the person which is indicated by the certificate is correct.

Furthermore, the advantage of using a certificate is that a third party can rely on the CA for the validation of the correctness of the identity associated with the certificate. Therefore, the user can authenticate himself with a strong link between his digital and physical identity, while controlling the information that are sent to third parties: only the information stored in the certificate is communicated to the third parties. The user therefore does not need to send identity or biometric information to third parties to authenticate himself. This enhances the ability of the user to control the use of his sensitive data.

The steps presented in the figure 3 are presented by means of example only of a method to create a digital identity in a number of embodiments of the invention. However, all the steps of figure 3 are not essential for the creation of a digital identity, and their order is not necessarily the one presented in figure 3.

For example, reference biometric data and identity document (steps 360 and 370) may be sent in the same time than the ID creation request (step 310). In this case, the RA does not need to send a request 340 for identity proof.

In a number of embodiments of the invention, the method 300 further comprises a step of creation, by the CA, of a hash of the reference biometric data. In a number of embodiments of the invention, the hash may also comprise the identity document, and any other sensitive information about the user.

The hash may be generated by any cryptographic hash algorithms, such as the MD5, or SHA1 algorithms.

The hash 3111 can be stored in the DB. The use of the hash allows assessing the compliance of future reference biometric data and/or identity documents with those that have been initially stored by the user, without exposing the reference biometric data and identity documents themselves.

Therefore, the user can send again biometrics data for sensitive operations (addition of identity documents, retrieval of his certificate...) while avoiding the sensitive data to be compromised, because the biometrics data and identity documents cannot be obtained from the hash.

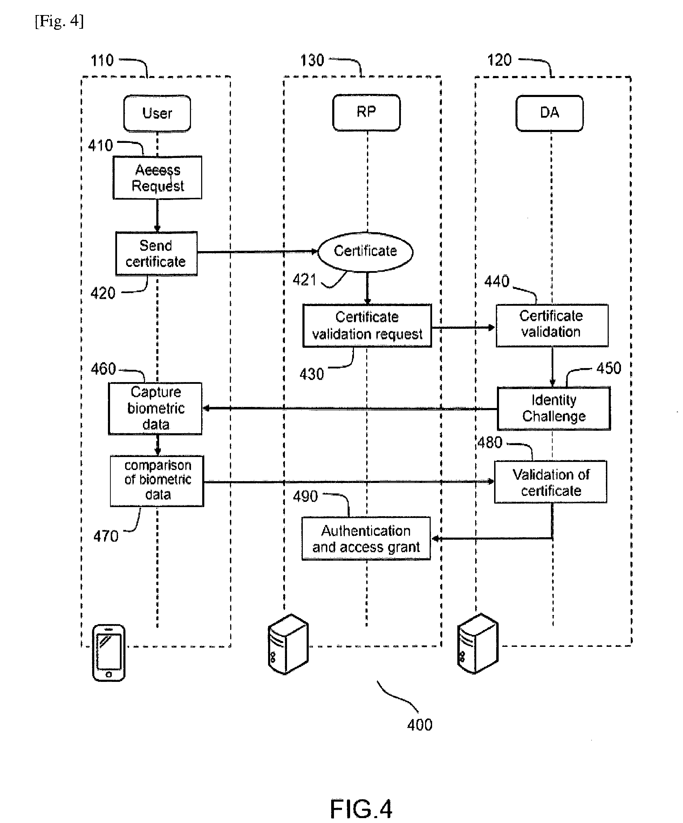

The figure 4 represents a flow chart of a computer-implemented method for authenticating a user in a number of embodiments of the invention.

The figure 4 represents the steps of a method 400 for authenticating a user according to his digital identity, as performed by the various functionalities of a PKI infrastructure according to the invention. In order to ease the comprehension of the figure 4, one column is created for each of the functionalities (user, RP, DA). The steps performed by the column user are actually performed by the processing logic 111, while the steps performed by the columns DA are actually performed by the at least one processing logic 121, and the steps performed by the column RP are actually performed by the processing logic 131.

As explained above, the RP may be any third party relying on the DA for the authentication of the user. It may for example be a bank, a merchant server, etc... that relies on the services provided by the DA to securely authenticate users. Therefore, the steps executed by the RP may actually be implemented by a third computing device 130. As in the figure 3, the steps performed by the user are actually implemented by the first device 110, and the steps executed by the DA by a second device 120.

The method 400 may thus correspond to any scenario of authentication of the user. For example, it may be an authentication of the user to servers of a third party (RP) such as a bank, a commercial website, etc... using a portable computing device such as a smartphone.

In a first step 410, the user / first device sends to the RP a request to access to a service provided by the RP.

In a subsequent step 420, the user sends to the RP a signed certificate 421 corresponding to his digital identity. This may be performed simultaneously to the access request at step 410, or upon a request from the RP. As mentioned above, the user can control the information contained in the signed certificate, so that it allows a strict control of the personal information that are transmitted to the RP. As the signed certificate contains the public key of the user, and the user possesses the corresponding private key, the user and RP can use the public and private keys to perform a secure exchange of information.

At step 430, the RP sends to the DA a certificate validation request, to validate the certificate 421. The certificate itself may be sent in the request.

At step 440, the DA verifies the validity of the certificate. The verification may include one or more of the following verifications:
- Verification that the signature is correct;
- Verification that the certificate has not been revoked or has not expired ;

If the certificate is not valid, the DA informs the RP that the certificate is not valid, and the authentication fails.

Otherwise, the DA sends 450 to the user an identity challenge, that is to say sends to the user a request to perform a live capture of biometric data, to ensure that the biometric data of the user that is currently making the request to access the service provided by the RP is actually the same that the user that created the identity which is the object of the signed certificate.

In a step 460, the user device therefore uses its sensor to capture biometric data of a user currently using the first computing device. This step is similar to the step 350 of capturing reference biometric data, except that it is performed by the user that is trying to authenticate himself. Of course, the capture needs to be performed by the same sensor, or a similar sensor, so that biometric data of the same type than reference biometric data can be obtained, and the data and reference data can be compared.

The captured biometric data are then compared, in a step 470, to the reference biometric data used to create the digital identity.

The comparison consists in comparing the closeness of the biometric data, and reference biometric data, to ensure that they belong to the same user. For example, this may consist in matching fingerprint, face recognition, voice characteristics, etc... Each type of biometric data is associated with comparison methods, and the skilled man could, without effort, select a comparison method which is well suited to the type of biometric data that is used.

This allows assessing whether the user that is trying to authenticate himself is the same than the user that created the digital identity.

Therefore, a complete chain of trust is obtained: the comparison of biometric data allows ensuring that the user that is trying to authenticate himself is the same that the one that created the digital identity, and the validity of the certificate is verified. In embodiments wherein the validity of an identity document provided by the user has also been validated, the exact identity of the user can be verified. The RP therefore benefits from a complete chain of trust that allows performing secure authentications, for example for sensitive operations.

Meanwhile, the user shares only the signed certificate with the RP. Therefore, the user has a complete control of the information that are shared with the RP.

The invention therefore allows a secure authentication of a digital identity of a user, while allowing the user to control the data that he is willing to share when authenticating himself. In addition, as the user does not need to share sensitive information with each RP/third party (i.e with each merchant server, for instance), because a large number of different RPs can rely the same DA. Therefore, this strongly enhances the protection of user's personal data, which do not need to be shared with a large number of different third parties.

The comparison between the biometric data and the reference biometric data may be performed either in the user's device, or by the DA.

The figure 4 represents an example wherein the comparison is performed within the user device (e.g the first device 110). It is for example the case is the first device is equipped with a secure application for authenticating the user. In such case, a copy of the reference biometric data is saved on the first device, and the comparison of the biometric data and the reference biometric data is performed on the first device, for example by the secure application. If the outcome of the comparison is positive, the first device sends to the DA an indication that the comparison of the biometric data and the reference biometric data is positive.

The comparison of the biometric data and the reference biometric data in the first device provides the advantage that it can be performed in a secure application, on the user device. This therefore enhances the ability of the user to control the personal data that are share. In addition, this avoids transmitting biometric data.

Alternatively, the user/first device may send the capture biometric data to the DA, which performs the comparison. This further enhances the control of the DA on the validity of the certificate, and the digital identity of the user that is trying to authenticate himself.

In a number of embodiments of the invention, the reference biometric data has been hashed, and stored in the DB, but no copy of the reference biometric data is stored by the second processing devices. In such cases, the biometric data received by the DA is hashed, and the respective hashes of the biometric data, and reference biometric data are compared rather than the biometric data themselves. This allows performing a secure comparison by the DA, without risking the reference biometric data to be hacked in case of a cyberattack on the DA.

At step 480, if the outcome of the comparison of the biometric data and the reference biometric data is positive, and if the certificate has been validated at step 440, the DA sends to the RP an indication that the certificate is valid.

The RP can then, at step 490, authenticate the user, and grant access to its services.

Otherwise, if either the outcome of the comparison of the biometric data and reference biometric data is negative at step 470, or the certificate validation at step 440 is negative, the authentication fails.

The steps presented in the figure 4 are presented by means of example only of a method to authenticate a user in a number of embodiments of the invention. However, all the steps of figure 4 are not essential for the authentication of the user, and their order is not necessarily the one presented in figure 4.

For example, the steps 460 and 470 of capturing and comparing the biometric data can be performed at the beginning of the method, and the outcome of the comparison sent to the DA in the same time than the certificate and access request is sent to the RP. Thus, the DA does not need to send at step 450 an identity challenge to the first device 110.

As another example, the DA can first send an identity challenge to the first device, then perform the step 440 of validating the certificate only if the outcome of the comparison of biometric data and reference biometric data is positive.

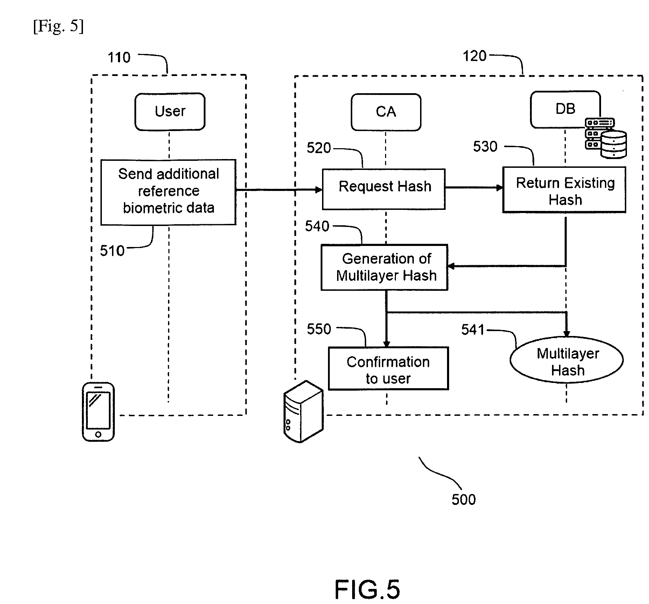

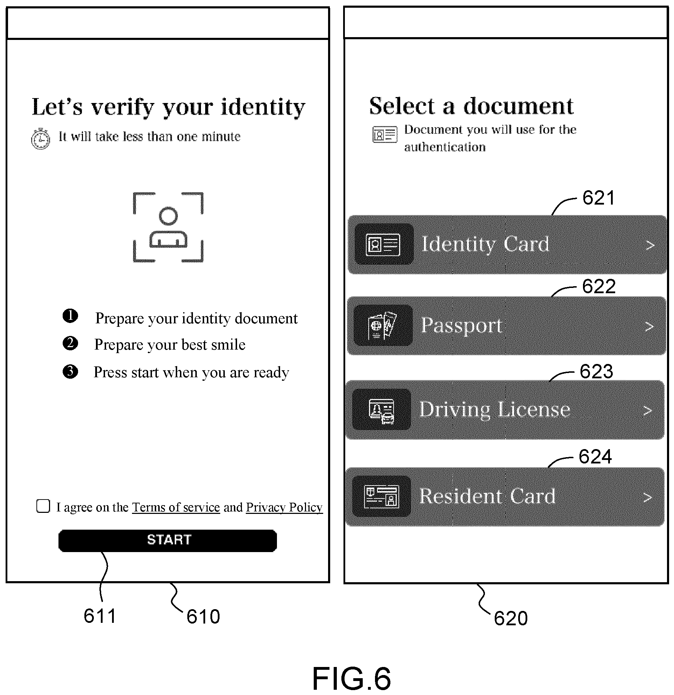

Figure 5 represents a computer-implemented method for generating hash data from reference biometric data.

The figure 5 represents the steps of a method for generating hash data from reference biometric data, as performed by the various functionalities of a PKI infrastructure according to the invention. In order to ease the comprehension of the figure 5, one column is created for each of the functionalities (user, CA, DB). The steps performed by the column user are actually performed by the processing logic 111, while the steps performed by the columns CA and DB are actually performed by the at least one processing logic 121.

As explained above, in a number of embodiments of the invention, the CA generates a hash from the reference biometric data, in order to be able to compare biometric data to reference biometric data without risking to expose reference biometric data to cyberattacks.

In a number of embodiments of the invention, the hash function used is a Multilayer Hash Function (MHF). For example, a three layer hash function may be used:
- A first layer of a SHA (Secure Hash Algorithm) may be used ;
- A salt is incorporated using the cryptographic function, such as the bcrypt function disclosed by Niels Provos et Mazières, David, « A Future-Adaptable Password Scheme », Proceedings of 1999 USENIX Annual Technical Conference, 1999, p. 81-9 ;
- A final encoding using an AES (Advanced Encryption Standard) is performed.

The use of a MHF allows generating a new hash from the previously existing one when new reference biometric data are added by the user. Therefore, the user can securely add new reference biometric data. For example, a user can complete his reference biometric data by adding new types of biometric data. The user may for example have initially hashed reference biometric data of a first type (for example face detection), then add reference biometric data of a second type (for example fingerprint detection). Meanwhile, in the MHF the new hash can be generated only if the user also sends biometric data matching the initial hash. For example, in order to add fingerprint detection to the hash comprising face detection, the user needs to send in the same time:
- biometric data of face detection that matches the reference biometric data of face detection in the hash; and
- the reference biometric data for fingerprint detection that will be added to the hash.

Afterwards, the user can use both the first and second reference biometric data (e.g face detection or fingerprint, for example) to authenticate himself. Therefore, the user can add new options, and complete its authentication options, while ensuring that an unbreakable dependency is obtained each time the hash is enriched.

In the example of figure 5, the user/first device 110 first sends 510 to the CA additional reference biometric data. As explained above, this additional reference biometric data may comprises both:
- a biometric data of the same type than initial reference biometric data (for example, if the initial biometric data is face detection, the output of an instantaneous face detection) ;
- and new reference biometric data, and new reference biometric data (for example, if the initial biometric data is face detection, a fingerprint detection).

The CA sends, at step 520, a request to the DB for the existing hash of the user.

At step 530, the DB returns the existing hash for the user. This may be performed by regenerating a hash using the biometric data that, in the additional reference biometric data, which corresponds to the reference biometric data of the initial type (e.g, in the example above, the additional reference biometric data relative to face detection), then retrieving the corresponding entry in the hash table. Therefore, the existing hash is obtained only if the additional reference biometric data, which corresponds to the reference biometric data of the initial type is identical to the initial biometric data, that is to say, in the example above, if the instantaneous face detection detects the same landmarks than the face detection performed during the creation of the digital identity of the user. Therefore, the hash can be enriched only if the user is the same than the user that created the digital identity.

At step 540, the CA executes the Multilayer Hash Function using the existing hash and additional reference biometric data to generate a new hash 541 representative of both the initial reference biometric data, and additional reference biometric data.

At step 550, the CA sends to the user a confirmation that the hash has been completed.

Once a multilayer hash is created, the user can use any of the reference biometric data (either initial or additional/new reference biometric data) to authenticate himself. For example, if the initial reference biometric data is a face detection, and the additional reference biometric data is a fingerprint detection, the user may use either the face detection or the fingerprint detection to authenticate himself. Similarly, the multilayer hash can be further enriched with further additional reference biometric data.

The user can also use any of the reference biometric data to securely authenticate himself for sensitive operations. For example, the user can add new identity documents to the hash, or retrieve sensitive information such as his signed certificate.

We are now going to describe a series of screenshots 610, 620 of an application in a end-user device for the creation of a digital identity in a number of embodiments of the invention.

References 610, 611, 620, 621, 622, 623 and 624 will further be discussed but are not illustrated.

In a number of embodiments of the invention, the user can use a secure application for creating a digital identity, and authenticating himself using this digital identity.

The screenshot 610 represents a start screen of the secure application. In the described example, the biometric data used is a face liveness detection. However, this is provided as a non limitative embodiment, and a similar application may be used with other kinds of biometric data, such as fingerprint recognition of voice recognition.

In the start screen 610, the user is prompted to prepare an identity documents, and prepare for capturing a picture of his face.

When the user is ready, he can click on the "start" button 611. A screen 620 then appears, wherein the user can select the identity document he is intended to use. He can for example click on one of the buttons 621, 622, 623, 624, to use respectively his identity card, passport, driving license, or resident card.

Once the user has selected his identity document, subsequent screens appear.

The user can first upload his identity document, for example and identity card (face and back). The validity document is then checked with the relevant administrative authority, for example the administrative authority of the country that issued the identity card.

If the check of the identity document is successful, a capture of biometric data is performed. In the described example of application, as the biometric data is a face liveness check, the capture consists in capturing a plurality of images of the face of the user, under different angles of views, either in the form of successive pictures, or in the form of a video. Then, the face live recognition can verify that the pictures correspond to a live human, and perform face recognition on the faces.

Thus, a complete association can be performed between the digital identity of the user, his physical identity and his biometric data. This can typically be implemented within the steps 310 to 370 of the computer-implemented method 300.

The examples described above are given as non-limitative illustrations of embodiments of the invention. They do not in any way limit the scope of the invention which is defined by the following claims.

## Claims

1. A computing system (100) comprising:
- a first computing device (110) comprising:
- at least one sensor (113) able to capture biometric data ;
- at least one first processing logic (111) ;
- at least one second computing device (120) comprising at least one second processing logic (121) ;
- a first communication link (140) between said first computing device and said second computing device ;
- at least one third computing device (130) comprising at least one third processing logic (131) ;
- a second communication link (141) between said second computing device and said third computing device ;
- a third communication link (142) between said first computing device and said third computing device ;
wherein:
- said first processing logic is configured to:
- store a private key and a certificate comprising a digital identifier of a user and a public key corresponding to the private key
- send (410) to said third device a request to access a service ;
- send (420) to said third device the signed certificate comprising the digital identifier of the user ;
- use (460) said sensor to capture biometric data of the user currently using the first computing device ;
- said third processing logic is configured to:
- send (430) to said second device a request for verifying the validity of the certificate;
- said second processing logic is configured to:
- verify (440) the validity of the certificate ;
- said first processing logic is configured to perform a comparison of said biometric data and reference biometric data and sending the output to the second computing device ; or sending the obtained biometric data to the second computing device in which case said second processing logic is configured to perform a comparison of said biometric data and reference biometric data
- if the output of said comparison is positive and the validity of the certificate is verified, the second processing logic is configured to send (480) to the third computing device an indication that the certificate is valid, and the third processing logic is configured to authenticate (490) the user and grant access to the service.

2. The computing system of claim 1, wherein the first processing logic is configured to perform said comparison of said biometric data and said reference biometric data, and send the outcome of the comparison to said second computing device.

3. The computing system of claim 1, wherein the first processing logic is configured to send the biometric data to said second computing device, and said second processing logic is configured to perform said comparison of said biometric data and said reference biomatric data

4. The computing system of any one of the previous claims, wherein:
- said first processing logic is configured to:
- send (310) a digital identity creation request to the second computing device ;
- use (350) said sensor to capture reference biometric data of the user of the first computing device ;
- send (360) said reference biometric data to said second computing device ;
- said second processing logic is configured to:
- create (320) the public and private key pair;
- create (390) the signed certificate comprising a digital identifier of the user and said public key ;
- send (3100) the signed certificate and private key to the first device.

5. The computing system of any one of the previous claims, wherein said second processing logic is further configured to create (3110) a hash based on said reference biometric data.

6. The computing system of claim 5, wherein said second processing logic is configured to use a multilayer hash function.

7. The computing system of claim 6, wherein:
- said first processing logic is configured to:
- send (510) an additional reference biometric data to the second computing device ;
- said second processing logic is configured to generate (540) a multilayer hash (541) from said hash and said additional reference biometric data.

8. The computing system of claim 6 or 7, wherein the multilayer hash function describes a biometric data chain.

9. The computing system of any one of the previous claims, wherein the first processing logic is further configured to send (370) an identity document of the user to said second computing device.

10. The computing system of one of any one of the previous claims, wherein said sensor is a camera, and said reference biometric data is a face liveness detection.

11. A computer-implemented method (400) comprising:
- Storing, in a first computing device (110):
- a private key, and
- a certificate comprising a digital identifier of a user and a public key corresponding to the private key
- sending (410), by the first computing device (110), a request to access a service to at least one third device (130);
- sending (420) to said third device, by said first computing device, the signed certificate comprising the digital identifier of the user and the public key ;
- sending (430), by said third computing device, a request for verifying the validity of the certificate to a second computing device (120) ;
- verifying (440), by the second computing device, the validity of the certificate ;
- using (460) by the first computing device, a sensor to capture biometric data of the user currently using the first computing device ;
- performing, by the first computing device, a comparison of said biometric data and reference biometric data and sending the output to the second computing device ; or sending the obtained biometric data to the second computing device and performing, by the second computing device, a comparison of said biometric data and reference biometric data ;
- if the output of said comparison is positive and the validity of the certificate is verified:
- sending (480), by the second computing device, an indication that the certificate is valid to the third computing device; and
- authenticating (490) the user, by the third computing device, and granting access to the service.

12. The computer-implemented method (300) according to claim 11, comprising previously to the step of claim 11:
- sending (310), by the first computing device (110), a digital identity creation request to the second computing device (120) ;
- creating (320), by said second computing device, the public and private key pair ;
- using (350), by said first computing device, the sensor to capture reference biometric data of the user of the first computing device ;
- sending (360), by said first computing device, said reference biometric data to said second computing device ;
- creating (390), by said second computing device, the signed certificate comprising the digital identifier of the user and said public key ;
- sending (3100), by said second computing device, the signed certificate and private key to the first device.

13. A computer program product comprising computer code instructions for executing a method according to one of claims 11 to 12.

## Patentansprüche

1. Rechensystem (100), umfassend:
- eine erste Rechenvorrichtung (110), umfassend:
- mindestens einen Sensor (113), der in der Lage ist, biometrische Daten zu erfassen;
- mindestens eine erste Verarbeitungslogik (111);
- mindestens eine zweite Rechenvorrichtung (120), umfassend mindestens eine zweite Verarbeitungslogik (121);
- eine erste Kommunikationsverbindung (140) zwischen der ersten Rechenvorrichtung und der zweiten Rechenvorrichtung;
- mindestens eine dritte Rechenvorrichtung (130), umfassend mindestens eine dritte Verarbeitungslogik (131);
- eine zweite Kommunikationsverbindung (141) zwischen der zweiten Rechenvorrichtung und der dritten Rechenvorrichtung;
- eine dritte Kommunikationsverbindung (142) zwischen der ersten Rechenvorrichtung und der dritten Rechenvorrichtung;
wobei:
- die erste Verarbeitungslogik konfiguriert ist zum:
- Speichern eines privaten Schlüssels und eines Zertifikats, umfassend eine digitale Kennung eines Benutzers und einen öffentlichen Schlüssel, der dem privaten Schlüssel entspricht
- Senden (410), an die dritte Vorrichtung, einer Anforderung zum Zugriff auf einen Dienst;
- Senden (420), an die dritte Vorrichtung, des signierten Zertifikats, umfassend die digitale Kennung des Benutzers;
- Verwenden (460) des Sensors, um biometrische Daten des Benutzers zu erfassen, der die erste Rechenvorrichtung aktuell verwendet;
- die dritte Verarbeitungslogik konfiguriert ist zum:
- Senden (430), an die zweite Vorrichtung, einer Anforderung zum Verifizieren der Gültigkeit des Zertifikats;
- die zweite Verarbeitungslogik konfiguriert ist zum:
- Verifizieren (440) der Gültigkeit des Zertifikats;
- die erste Verarbeitungslogik konfiguriert ist, um einen Vergleich der biometrischen Daten mit den biometrischen Referenzdaten durchzuführen und Senden der Ausgabe an die zweite Rechenvorrichtung; oder Senden der erhaltenen biometrischen Daten an die zweite Rechenvorrichtung, wobei in diesem Fall die zweite Verarbeitungslogik konfiguriert ist, um einen Vergleich der biometrischen Daten mit den biometrischen Referenzdaten durchzuführen
- falls die Ausgabe des Vergleichs positiv ist und die Gültigkeit des Zertifikats verifiziert ist, die zweite Verarbeitungslogik konfiguriert ist, um an die dritte Rechenvorrichtung eine Angabe zu senden (480), dass das Zertifikat gültig ist, und die dritte Verarbeitungslogik konfiguriert ist, um den Benutzer zu authentifizieren (490) und Zugriff auf den Dienst zu gewähren.

2. Rechensystem nach Anspruch 1, wobei die erste Verarbeitungslogik konfiguriert ist, um den Vergleich der biometrischen Daten und der biometrischen Referenzdaten durchzuführen und das Ergebnis des Vergleichs an die zweite Rechenvorrichtung zu senden.

3. Rechensystem nach Anspruch 1, wobei die erste Verarbeitungslogik konfiguriert ist, um die biometrischen Daten an die zweite Rechenvorrichtung zu senden, und die zweite Verarbeitungslogik konfiguriert ist, um den Vergleich der biometrischen Daten und der biometrischen Referenzdaten durchzuführen.

4. Rechensystem nach einem der vorstehenden Ansprüche, wobei:
- die erste Verarbeitungslogik konfiguriert ist zum:
- Senden (310) einer Erstellungsanforderung einer digitalen Identität an die zweite Rechenvorrichtung;
- Verwenden (350) des Sensors, um biometrische Referenzdaten des Benutzers der ersten Rechenvorrichtung zu erfassen;
- Senden (360) der biometrischen Referenzdaten an die zweite Rechenvorrichtung;
- die zweite Verarbeitungslogik konfiguriert ist zum:
- Erstellen (320) des öffentlichen und privaten Schlüsselpaars;
- Erstellen (390) des signierten Zertifikats, umfassend eine digitale Kennung des Benutzers und den öffentlichen Schlüssel;
- Senden (3100) des signierten Zertifikats und des privaten Schlüssels an die erste Vorrichtung.

5. Rechensystem nach einem der vorstehenden Ansprüche, wobei die zweite Verarbeitungslogik ferner konfiguriert ist, um einen Hash basierend auf den biometrischen Referenzdaten zu erstellen (3110).

6. Rechensystem nach Anspruch 5, wobei die zweite Verarbeitungslogik konfiguriert ist, um eine mehrschichtige Hash-Funktion zu verwenden.

7. Rechensystem nach Anspruch 6, wobei:
- die erste Verarbeitungslogik konfiguriert ist zum:
- Senden (510) zusätzlicher biometrischer Referenzdaten an die zweite Rechenvorrichtung;
- die zweite Verarbeitungslogik konfiguriert ist, um einen mehrschichtigen Hash (541) aus dem Hash und den zusätzlichen biometrischen Referenzdaten zu erzeugen (540).

8. Rechensystem nach Anspruch 6 oder 7, wobei die mehrschichtige Hash-Funktion eine biometrische Datenkette beschreibt.

9. Rechensystem nach einem der vorstehenden Ansprüche, wobei die erste Verarbeitungslogik ferner konfiguriert ist, um ein Identitätsdokument des Benutzers an die zweite Rechenvorrichtung zu senden (370).

10. Rechensystem nach einem der vorstehenden Ansprüche, wobei der Sensor eine Kamera ist und die biometrischen Referenzdaten eine Gesichtslebendigkeitserkennung sind.

11. Computerimplementiertes Verfahren (400), umfassend:
- Speichern in einer ersten Rechenvorrichtung (110):
- einen privaten Schlüssel und
- ein Zertifikat, umfassend eine digitale Kennung eines Benutzers und einen öffentlichen Schlüssel, der dem privaten Schlüssel entspricht
- Senden (410), durch die erste Rechenvorrichtung (110), einer Anforderung zum Zugriff auf einen Dienst an mindestens eine dritte Vorrichtung (130);
- Senden (420), an die dritte Vorrichtung durch die erste Rechenvorrichtung, des signierten Zertifikats, umfassend die digitale Kennung des Benutzers und den öffentlichen Schlüssel;
- Senden (430), durch die dritte Rechenvorrichtung, einer Anforderung zum Verifizieren der Gültigkeit des Zertifikats an eine zweite Rechenvorrichtung (120);
- Verifizieren (440), durch die zweite Rechenvorrichtung, der Gültigkeit des Zertifikats;
- Verwenden (460), durch die erste Rechenvorrichtung, eines Sensors, um biometrische Daten des Benutzers zu erfassen, der die erste Rechenvorrichtung aktuell verwendet;
- Durchführen, durch die erste Rechenvorrichtung, eines Vergleichs der biometrischen Daten und der biometrischen Referenzdaten und Senden der Ausgabe an die zweite Rechenvorrichtung; oder Senden der erhaltenen biometrischen Daten an die zweite Rechenvorrichtung und Durchführen, durch die zweite Rechenvorrichtung, eines Vergleichs der biometrischen Daten und der biometrischen Referenzdaten;
- falls die Ausgabe des Vergleichs positiv ist und die Gültigkeit des Zertifikats verifiziert ist:
- Senden (480), durch die zweite Rechenvorrichtung, einer Angabe, dass das Zertifikat gültig ist, an die dritte Rechenvorrichtung; und
- Authentifizieren (490) des Benutzers durch die dritte Rechenvorrichtung und Gewähren des Zugriffs auf den Dienst.

12. Computerimplementiertes Verfahren (300) nach Anspruch 11, umfassend vor dem Schritt nach Anspruch 11:
- Senden (310), durch die erste Rechenvorrichtung (110), einer Erstellungsanforderung einer digitalen Identität an die zweite Rechenvorrichtung (120);
- Erstellen (320), durch die zweite Rechenvorrichtung, des öffentlichen und privaten Schlüsselpaars;
- Verwenden (350), durch die erste Rechenvorrichtung, des Sensors, um biometrische Referenzdaten des Benutzers der ersten Rechenvorrichtung zu erfassen;
- Senden (360), durch die erste Rechenvorrichtung, der biometrischen Referenzdaten an die zweite Rechenvorrichtung;
- Erstellen (390), durch die zweite Rechenvorrichtung, des signierten Zertifikats, umfassend die digitale Kennung des Benutzers und den öffentlichen Schlüssel;
- Senden (3100), durch die zweite Rechenvorrichtung, des signierten Zertifikats und des privaten Schlüssels an die erste Vorrichtung.

13. Computerprogrammprodukt, umfassend Computercodeanweisungen zum Ausführen eines Verfahrens nach einem der Ansprüche 11 bis 12.

## Revendications

1. Système informatique (100) comprenant :
- un premier dispositif informatique (110) comprenant :
- au moins un capteur (113) capable de capturer des données biométriques ;
- au moins une première logique de traitement (111) ;
- au moins un deuxième dispositif informatique (120) comprenant au moins une deuxième logique de traitement (121) ;
- une première liaison de communication (140) entre ledit premier dispositif informatique et ledit deuxième dispositif informatique ;
- au moins un troisième dispositif informatique (130) comprenant au moins une troisième logique de traitement (131);
- une deuxième liaison de communication (141) entre ledit deuxième dispositif informatique et ledit troisième dispositif informatique ;
- une troisième liaison de communication (142) entre ledit premier dispositif informatique et ledit troisième dispositif informatique ;
dans lequel :
- ladite première logique de traitement est configurée pour :
- stocker une clé privée et un certificat comprenant un identifiant numérique d'un utilisateur et une clé publique correspondant à la clé privée
- envoyer (410) audit troisième dispositif une demande d'accès à un service ;
- envoyer (420) audit troisième dispositif le certificat signé comprenant l'identifiant numérique de l'utilisateur ;
- utiliser (460) ledit capteur pour capturer des données biométriques de l'utilisateur qui utilise actuellement le premier dispositif informatique ;
- ladite troisième logique de traitement est configurée pour :
- envoyer (430) audit deuxième dispositif une demande de vérification de la validité du certificat ;
- ladite deuxième logique de traitement est configurée pour :
- vérifier (440) la validité du certificat ;
- ladite première logique de traitement est configurée pour réaliser une comparaison desdites données biométriques et de données biométriques de référence et envoyer le résultat au deuxième dispositif informatique ; ou envoyer les données biométriques obtenues au deuxième dispositif informatique, auquel cas ladite deuxième logique de traitement est configurée pour réaliser une comparaison desdites données biométriques et de données biométriques de référence
- si le résultat de ladite comparaison est positif et que la validité du certificat est vérifiée, la deuxième logique de traitement est configurée pour envoyer (480) au troisième dispositif informatique une indication que le certificat est valide, et la troisième logique de traitement est configurée pour authentifier (490) l'utilisateur et octroyer l'accès au service.

2. Système informatique selon la revendication 1, dans lequel la première logique de traitement est configurée pour réaliser ladite comparaison desdites données biométriques et desdites données biométriques de référence, et envoyer l'aboutissement de la comparaison audit deuxième dispositif informatique.

3. Système informatique selon la revendication 1, dans lequel la première logique de traitement est configurée pour envoyer les données biométriques audit deuxième dispositif informatique, et ladite deuxième logique de traitement est configurée pour réaliser ladite comparaison desdites données biométriques et desdites données biométriques de référence.

4. Système informatique selon l'une quelconque des revendications précédentes, dans lequel :
- ladite première logique de traitement est configurée pour :
- envoyer (310) une demande de création d'identité numérique au deuxième dispositif informatique ;
- utiliser (350) ledit capteur pour capturer des données biométriques de référence de l'utilisateur du premier dispositif informatique ;
- envoyer (360) lesdites données biométriques de référence audit deuxième dispositif informatique ;
- ladite deuxième logique de traitement est configurée pour :
- créer (320) la paire de clés publique et privée ;
- créer (390) le certificat signé comprenant un identifiant numérique de l'utilisateur et ladite clé publique ;
- envoyer (3100) le certificat signé et la clé privée au premier dispositif.

5. Système informatique selon l'une quelconque des revendications précédentes, dans lequel ladite deuxième logique de traitement est en outre configurée pour créer (3110) un hachage basé sur lesdites données biométriques de référence.

6. Système informatique selon la revendication 5, dans lequel ladite deuxième logique de traitement est configurée pour utiliser une fonction de hachage multicouche.

7. Système informatique selon la revendication 6, dans lequel :
- ladite première logique de traitement est configurée pour :
- envoyer (510) des données biométriques de référence supplémentaires au deuxième dispositif informatique ;
- ladite deuxième logique de traitement est configurée pour générer (540) un hachage multicouche (541) à partir dudit hachage et desdites données biométriques de référence supplémentaires.

8. Système informatique selon la revendication 6 ou 7, dans lequel la fonction de hachage multicouche décrit une chaîne de données biométriques.

9. Système informatique selon l'une quelconque des revendications précédentes, dans lequel la première logique de traitement est en outre configurée pour envoyer (370) un document d'identité de l'utilisateur audit deuxième dispositif informatique.

10. Système informatique selon l'une quelconque des revendications précédentes, dans lequel ledit capteur est une caméra et lesdites données biométriques de référence sont une détection de la vivacité du visage.

11. Procédé mis en oeuvre par ordinateur (400) comprenant :
- le stockage, dans un premier dispositif informatique (110) :
- d'une clé privée, et
- d'un certificat comprenant un identifiant numérique d'un utilisateur et une clé publique correspondant à la clé privée
- l'envoi (410), par le premier dispositif informatique (110), d'une demande d'accès à un service à au moins un troisième dispositif (130) ;
- l'envoi (420) audit troisième dispositif, par ledit premier dispositif informatique, du certificat signé comprenant l'identifiant numérique de l'utilisateur et la clé publique ;
- l'envoi (430), par ledit troisième dispositif informatique, d'une demande de vérification de la validité du certificat à un deuxième dispositif informatique (120) ;
- la vérification (440), par le deuxième dispositif informatique, de la validité du certificat ;
- l'utilisation (460) par le premier dispositif informatique, d'un capteur pour capturer des données biométriques de l'utilisateur qui utilise actuellement le premier dispositif informatique ;
- la réalisation, par le premier dispositif informatique, d'une comparaison desdites données biométriques et de données biométriques de référence et l'envoi du résultat au deuxième dispositif informatique ; ou l'envoi des données biométriques obtenues au deuxième dispositif informatique et la réalisation, par le deuxième dispositif informatique, d'une comparaison desdites données biométriques et de données biométriques de référence ;
- si le résultat de ladite comparaison est positif et que la validité du certificat est vérifiée :
- l'envoi (480), par le deuxième dispositif informatique, d'une indication que le certificat est valide au troisième dispositif informatique ; et
- l'authentification (490) de l'utilisateur, par le troisième dispositif informatique, et l'octroi de l'accès au service.

12. Procédé mis en oeuvre par ordinateur (300) selon la revendication 11, comprenant préalablement à l'étape de la revendication 11 :
- l'envoi (310), par le premier dispositif informatique (110), d'une demande de création d'identité numérique au deuxième dispositif informatique (120) ;
- la création (320), par ledit deuxième dispositif informatique, de la paire de clés publique et privée ;
- l'utilisation (350), par ledit premier dispositif informatique, du capteur pour capturer des données biométriques de référence de l'utilisateur du premier dispositif informatique ;
- l'envoi (360), par ledit premier dispositif informatique, desdites données biométriques de référence audit deuxième dispositif informatique ;
- la création (390), par ledit deuxième dispositif informatique, du certificat signé comprenant l'identifiant numérique de l'utilisateur et ladite clé publique ;
- l'envoi (3100), par ledit deuxième dispositif informatique, du certificat signé et de la clé privée au premier dispositif.

13. Produit-programme informatique comprenant des instructions de code informatique destinées à exécuter un procédé selon l'une des revendications 11 à 12.
